# EUROPEAN PATENT SPECIFICATION

(11) **EP 1 761 837 B1**
(45) Date of publication and mention of the grant of the patent: **01.06.2011**
(21) Application number: 05786047.0
(22) Date of filing: 24.06.2005
(51) Int. Cl.: G06F 1/00

(54) **SYSTEM AND METHOD FOR SECURE INTER-PLATFORM AND INTRA-PLATFORM COMMUNICATIONS**
SYSTEM UND VERFAHREN FÜR SICHERE INTERPLATTFORM- UND INTRAPLATTFORM-KOMMUNIKATIONEN
SYSTEME ET PROCEDE DE COMMUNICATIONS INTER-PLATEFORME ET INTRA-PLATEFORME SECURISEES

(30) Priority: 29.06.2004 US 881777
(43) Date of publication of application: 14.03.2007
(73) Proprietor: Intel Corporation, Santa Clara, CA 95052 (US)
(72) Inventor: DURHAM, David, Beaverton, OR 97007 (US); SAHITA, Ravi, Beaverton, OR 97006 (US); RAJAGOPAL, Priya, Wharton, NJ 07885 (US); SCHLUESSLER, Travis, Hillsboro, OR 97123 (US); ZIMMER, Vincent, Federal Way, WA 98003 (US)
(74) Representative: Beresford, Keith Denis Lewis
(86) International application number: PCT/US2005/022577
(87) International publication number: WO 2006/012341

(56) References cited:
- WO-A-01/42874
- US-A- 5 944 821
- US-A- 6 105 137
- US-A1- 2003 005 272
- US-A1- 2003 229 794
- US-A1- 2004 039 924
- US-B1- 6 658 515

## Description

### TECHNICAL FIELD

Embodiments of the invention generally relate to the field of network security and, more particularly, to a system and method for inter-platform and intra-platform communications.

### BACKGROUND

Computer networks are widely used by businesses, public institutions, and individuals. Software programs (or simply, programs) exchange information with each other via computer networks. Protecting the integrity and confidentiality of these communications is crucial in today's networked computing environment. Obviously, transmitting passwords, cryptographic keys, or other private information in clear text makes a computing system vulnerable to compromise by hostile attackers. This is because the keying material can be retrieved from memory by debuggers, malware, or other software components on the system which have been compromised by an attacker. The term "keying material" broadly refers to, for example, cryptographic keys, session keys, passwords, digital certificates, and/or any sensitive information.

Conventional approaches to protecting confidential information in computing systems are typically based on either virtual private networks (VPN) or specialized hardware. Virtual private networks can easily be circumvented or tampered with because they are implemented as application software and/or as a kernel level driver which can be violated by other software components running in a privileged mode.

Hardware solutions may include, Trusted Platform Modules (TPMs) or dedicated co-processors for implementing cryptographic functions. Trusted Platform Modules are microchips that store, for example, cryptographic keys, passwords, and/or digital certificates. Hardware based security solutions are expensive and use separate hardware to isolate themselves from the rest of a system's hardware. Moreover, TPMs are typically connected to the chipset using a low bandwidth serial bus which makes it unsuitable for applications that require high bandwidth exchange of data such as encryption/decryption of network traffic. Hence, conventional systems lack a cost- effective, secure, and tamper-resistant method for encrypting data in software running on the host processor so that it is inline with the programs that directly interact with this data.

Disclosed in US 2003/0229794 is a system and method for permitting the execution of system management mode (SMM) code during secure operations in a microprocessor system. The system management interrupt (SMI) may be first directed to a handler in a secured virtual machine monitor (SMM). The SMI may then be re-directed to SMM code located in a virtual machine (VM) that is under the security control of the SVMM. This redirection may be accomplished by allowing the SVMM to read and write the system management (SM) base register in the processor.

Disclosed in US 2004/0039924 is a system and method for securing a computing device using a master cryptographic key that is bound to the device.

Disclosed in WO 01/42874 is a system and method for securely transferring control to a system management mode (SMM) in response to an SMI by referencing the address of a calling instruction that generated the SMI with a dispatch table only visible in SMM.

According to a first aspect of the invention there is provided a method as defined in claim 1.

According to a second aspect of the invention there is provided an apparatus as defined in claim 17.

### BRIEF DESCRIPTION OF THE DRAWINGS

Embodiments of the invention are illustrated by way of example, and not by way of limitation, in the figures of the accompanying drawings in which like reference numerals refer to similar elements.
Figure 1 is a block diagram illustrating various communications that may be protected by embodiments of the invention.
Figures 2A-2B illustrate a program utilizing security operations provided by a protected region of memory, according to an embodiment of the invention.
Figure 3A is a flow diagram illustrating certain aspects of a method for initializing a protected region of memory (e.g., System Management Random Access Memory), according to an embodiment of the invention.
**Figures 3B-3C** are flow diagrams illustrating certain aspects of a method for secure inter-platform and intra-platform communication, according to an embodiment of the invention.
**Figure 4** is a block diagram of a framework for encrypting outbound packets, according to an embodiment of the invention.
**Figure 5** is a block diagram illustrating an embodiment of the invention that supports network security protocols at different network layers.
**Figure 6** is a transaction diagram illustrating a transaction implemented according to an embodiment of the invention.

### DETAILED DESCRIPTION

A system and method are provided to preserve the confidentiality and/or integrity of a sensitive communication (and the functionality that supports the communication) from its source to its destination whether locally on the platform, between platforms, or even the same program over time. As is further described below, embodiments of the invention may be used by host resident software to implement any security processing (for example, encryption) on any data (for example, network traffic) that needs to be done in a tamper-resistant and confidential environment. Embodiments of the invention may also correctly identify and protect the source of the program requesting these services. Thus, embodiments of the invention may provide a mechanism to secure keying material within an inline (yet hidden) processor mode. As is further described below, embodiments of the invention may be used by ring-0 programs (e.g., kernel programs) to secure communications with platform components, provide unspoofable authentication/authorization, and even verify the integrity of the program's internal state from invocation to invocation.

For ease of explanation, embodiments of the invention are disclosed with reference to the encryption of data transmitted over a network. Alternative embodiments, however, may be directed to the security processing of any data that needs to be done in a tamper-resistant and confidential environment. For example, embodiments of the invention may be directed to protecting inter-platform and/or intra-platform communication as well as inter-program and/or intra-program communication.

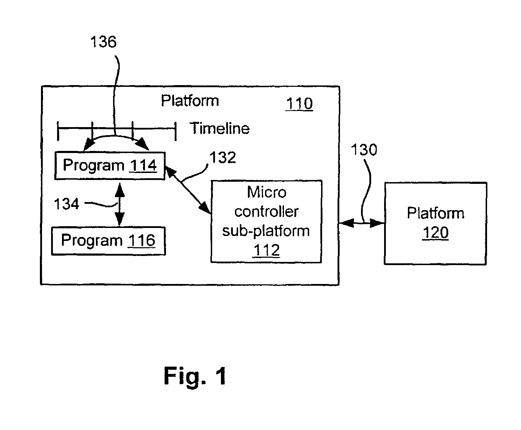

FIG. 1 is a block diagram illustrating various communications that may be protected by embodiments of the invention. FIG. 1 includes platforms 110 and 120. The term "platform" broadly refers to the hardware (e.g., processor), software (e.g., operating system), microcode, chipset, firmware, etc, that provide data processing. Reference number 130 illustrates inter-platform communication (e.g., between platforms 110 and 120). Platform 110 includes microcontroller sub-platform 112. The intra-platform communication between program 114 (e.g., running on the host processor) and microcontroller sub-platform 112 are illustrated by reference number 132.

Programs 114 and 116 may represent two programs executing on the host processor (not shown). The term program may refer to a kernel component (e.g., a ring-0 program) or an application program (e.g., a ring-3 program). An example of inter-program communication is the communication between programs 114 and 116 as shown by reference number 134. In an embodiment, a program (e.g., program 114) may securely store its data structures and/or states and securely access the stored data structures and/or states over time (e.g., to periodically check the integrity of its internal data structures across context changes and/or process invocations). Reference number 136 illustrates an intra-program embodiment in which program 114 securely stores its data structures and/or states and securely accesses the stored data structures and/or states over time.

Embodiments of the invention may use a System Management Mode (SMM) or similar specialized processor mode to protect keying material and the cryptographic functions that utilize this keying material to encrypt/decrypt and/or validate the integrity of any data. The SMM provides a partitioned memory and context in which the keying material is protected from disclosure to other programs running on a host system. Embodiments of the invention increase the security of keying material by providing an isolated and tamper-resistant environment for key storage and processing and, thereby, increase the difficulty for an attacker to obtain the keying material through traditional attack vectors.

The SMM (or similar) specialized processor mode may also provide security processing for program data. The term "security processing" broadly refers to processes that enhance the security of data such as encryption, decryption, authorization, authentication, integrity checking, and the like. The SMM is a special operating mode that provides an isolated environment that is independent of the operating system. A processor enters the SMM when a System Management Interrupt (SMI) is triggered and executes code and data from a chipset protected region of main memory called System Management Random Access Memory (SMRAM) that is inaccessible to software executing in other processor operating modes.

For ease of reference, the SMM and similar specialized processor modes are collectively called management modes. In an embodiment, the management mode obtains state information from the program that triggers it. In one embodiment, the program provides a saved state map or similar structure to the management mode when it invokes the management mode. The saved state map (or similar structure) provides information about processor state at the time of entering the management mode. For example, a program executing in the management mode may recover the program counter of the invoking program from the saved state map (or similar structure). In an embodiment, this provides a tamper proof way to detect the source of the call which can be traced back to the program triggering the SMI.

Since the location of the invoking program's code store can be overwritten by an attacking program, it may be desirable to verify or otherwise protect the integrity of that code store. In an embodiment, program images that are sources of SMI notifications are authenticated using a suitable hardware or software technique. Examples of mechanisms for authenticating program images include, but are not limited to, validating the image from the management mode (e.g., the SMM) or other protected system component (such as a Navassa embedded processor), and the like.

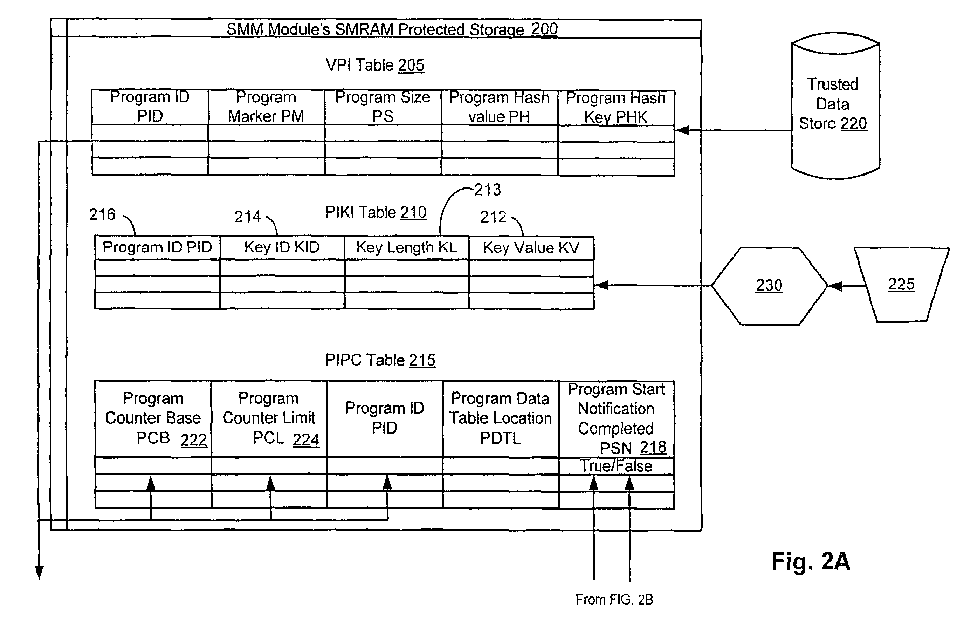

FIGs. 2A-2B illustrate an invoking program utilizing security operations provided by a protected region of memory. The illustrated embodiment may be described with reference to the SMM and System Management Random Access Memory (SMRAM). It is to be appreciated that different management modes and different protected regions of memory may be used in an alternative embodiment of the invention.

In an embodiment, SMRAM 200 includes the following data structures: Valid Program Identification (VPI) table 205; Program Identifier (ID) to Key Identifier (PIKI) mapping table 210; and Program ID to Program Counter Range (PIPC) mapping table 215. In an alternative embodiment, SMRAM 200 may include more data structures, fewer data structures, and/or different data structures.

In an embodiment, VPI table 205 contains information on how to identify particular programs and to determine whether in-memory program images are valid. In one embodiment, the programs identified in VPI table 205 are the programs that are allowed to invoke the security operations of the SMM. In one embodiment, VPI table 205 is provisioned over a secure channel from a trusted data store 220. Alternatively, VPI table 205 may be provisioned by local trusted platform components such as an embedded management microcontroller (e.g., the Proactive/Navassa platform developed by Intel Corporation) that can provide secure remote Out-Of-Band (OOB) connections to the platforms.

Table 1 describes a number of data structures that may be included in VPI table 205. In alternative embodiments, the data structures may have different names. In addition, more data structures, fewer data structures, and/or different data structures may be used in alternative embodiments of the invention.

**TABLE 1**

| Data Structure Name | Brief Description |
|---|---|
| Program Identifier (PID) | Generic number/string that uniquely identifies a program on the machine. |
| Program Marker (PM) | A string of bytes used to identify the location of a program image in memory with a high probability (may be static sequence of bytes compiled into the program). This sequence should mark the start of the program's image in memory. |
| Program Size (PS) | Bounds the program's image size in memory (how large the image is starting at the PM). |
| Program Hash Value (PHV) | Specifies the Secure Hash Algorithm 1 (SHA1) or Message Digest (MD5) hash value that is computed over the program image using the Program Hash Key (PHK). The program image in memory should compute the same PHV if it has not been modified from its expected form. |
| Program Hash Key (PHK) | Key used to calculate the PHV for a particular program image. |

In an embodiment, PIKI table 210 contains protected key values and the key identifiers used to identify the key values. In one embodiment, PIKI table 210 associates particular keying material with a particular program (e.g., via the PID). In an embodiment, administrator 225 provisions PIKI table 210 via out-of-band provisioning process 230.

Table 2 describes a number of data structures that may be included in PIKI table 210. In alternative embodiments, the data structures may have different names. In addition, more data structures, fewer data structures, and/or different data structures may be used in alternative embodiments of the invention.

**TABLE 2**

| Data Structure Name | Brief Description |
|---|---|
| Program Identifier (PID) 216 | Generic number/string that uniquely identifies a program on the machine. |
| Key ID (KID) 214 | Key identifier used by programs to communicate to the SMM component which key should be used for its operation. |
| Key Length (KL) 213 | Length of a particular key stored in SMRAM identified by KID. |
| Key Value (KV) 212 | The actual key value, stored in SMRAM protected memory, identified by a KID. |

In an embodiment, PIPC table 215 is created by an SMM component (or other trusted agent) such as a security process. PIPC table 215 may be used to compute the location in host memory of a particular program and to track the program's status. Table 3 describes a number of data structures that may be included in PIPC table 215. In alternative embodiments, the data structures may have different names. In addition, more data structures, fewer data structures, and/or different data structures may be used in alternative embodiments of the invention.

**TABLE 3**

| Data Structure Name | Brief Description |
|---|---|
| Program Counter Base (PCB) 222 | Program start location, should correspond to the memory address where the PM was actually found in host memory. |
| Program Counter Limit (PCL) 224 | Program end location, should correspond to the PCB + PS. |
| Program Identifier (PID) | Generic number/string that uniquely identifies a program on the machine. |
| Program Start Notification Completed (PSN) 218 | Used to record whether the Program Start Notification was properly called by a particular valid program. It is cleared on a Program End Notification. |

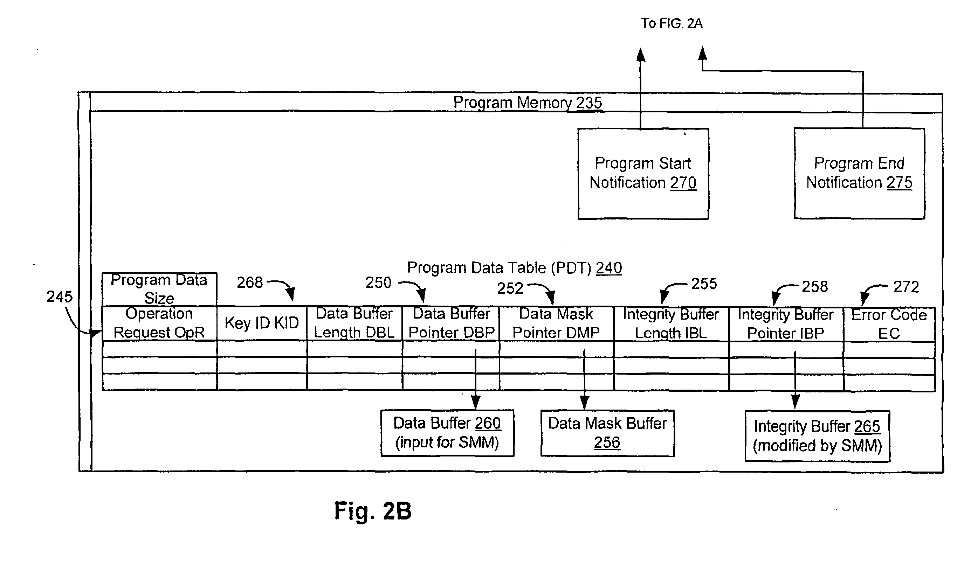

FIG 2B illustrates program memory 235 according to an embodiment of the invention. The term "program memory" refers to a region of memory (e.g., Random Access Memory (RAM)) that is accessible to a program executing on a host processor. In one embodiment, SMRAM 200 and program memory 235 may both be part of a host processor's main memory. In an alternative embodiment, SMRAM 200 may be implemented in a region of memory other than the host processor's main memory.

In an embodiment, a program communicates with SMM components (e.g., the security programs stored in the SMM), at least in part, through Program Data Table (PDT) 240. SMM components may access PDT 240 because the SMM is a highly privileged processor mode that can access program memory 235 (as well as the operating system's memory). PDT 240 may specify particular security operations 245 to be performed on program data. In addition, PDT 240 may specify the location of the program data. For example, in the illustrated embodiment data buffer pointer (DBP) 250 points to data buffer 260 and integrity buffer pointer (IBP) 258 points to integrity buffer 265. In addition, PDT 240 may identify the keying material to be used to process the program data via key identifier 268. For example, key identifier 268 may identify a key stored in SMRAM 200 that may be used to process data stored, for example, in data buffer 260.

Table 4 describes a number of data structures that may be included in PDT 240. In alternative embodiments, the data structures may have different names. In addition, more data structures, fewer data structures, and/or different data structures may be used in alternative embodiments of the invention.

**TABLE 4**

| Data Structure Name | Brief Description |
|---|---|
| Operation Request (OpR) 245 | Identifies the particular security operation (e.g., integrity check, encrypt, decrypt, etc.) the program wishes the SMM to apply to its selected data buffers. |
| Data Buffer Length (DBL) | Identifies the length of a program's data buffer. |
| Data Buffer Pointer (DBP) 250 | Pointer to the program's actual data buffer used by SMM as input for requested operations. |
| Data Mask Pointer (DMP) 252 | Pointer to mask buffer that indicates which |
| | bits in data buffer 260 the SMM operations should skip. |
| Integrity Buffer Length (IBL) 255 | Length of the integrity buffer allocated by the program. |
| Integrity Buffer Pointer (IBP) 258 | Pointer to program's buffer holding integrity information such as a Hash Method Authentication Code (HMAC). |
| Error Code (EC) 272 | Value returned by the SMM when a particular operation fails. It may specify the reason for the failure or indicate NONE if there is no failure. |

Since PDT 240 "lives" in a vulnerable memory region, in an embodiment, the integrity of this data structure, as well as the integrity of the data buffers (e.g., data buffer 260 and/or integrity buffer 265) needs to be assured. One mechanism for assuring the validity of the data in these structures is to ensure that only the valid program that owns these data structures is allowed to manipulate these data structures. In one embodiment, this mechanism is implemented by the program bounding all valid modifications to PDT 240 between program start and program end notifications to the SMM component. In this way, the SMM component can track which program is running before PDT 240 is modified.

Program start notification 270 notifies an SMM component that a program is going to invoke a security operation provided by the SMM component. In an embodiment, program start notification 270 is issued by the program or device driver as soon as it is invoked and before it starts modifying internal data structures of PDT 240. In one embodiment, program start notification 270 is an SMI notification. In an embodiment, a program start notification handler (not shown) may receive program start notification 270. The handler may verify the program image and record the source of the caller in PIPC table 215 by, for example, setting Program Start Notification (PSN) indicator 218 to TRUE for the table entry if the program counter is in the proper range and the program's image in this range remains unmodified. Immediately after the PSN handler returns, the program/driver may setup its internal data structures and configure PDT table 240 which may be used as input for the Operation Notification handler (not shown). The program/driver may disable interrupts when doing this to avoid context switches (that can cause malicious code to execute) and thereby prevent malicious code from changing the program's data or state prior to the Operation Notification.

An "operation notification" refers to a request by a program/driver for an SMM component to provide a security operation (e.g., to provide secure data and/or to process program data). In an embodiment, the operation notification may be implemented with an SMI notification. In one embodiment, the SMI notification may be issued by the program or device driver only after an SMI Program Start Notification 270 completed successfully. In an embodiment, the SMI handler for this notification will recover the invoker's program counter from, for example, the Saved State Map (SSM) and find the entry in PIPC table 215 where the recovered program counter is in the range between PCB 222 and PCL 224. If a matching range is found in PIPC table 215, the SMI handler may then verify that the PSN value 218 for that PIPC entry is set to TRUE, meaning Program Start Notification 270 was properly invoked previously by the same program. If PSN value 218 is TRUE, the handler may then read data from PDT 240 that was setup by the program prior to this notification and apply the operation requests 245 specified there for the provided Key IDs 268.

In an embodiment, operation request 245 specifies a security operation for an SMM component. The security operation may include obtaining confidential data and/or may include invoking a security process for program data. Examples of security processes include, and are not limited to, an encrypt operation, a decrypt operation, and/or an integrity check of encrypted and/or decrypted data.

In an embodiment, an encrypt operation may cause a handler (e.g., an SMI handler) to execute a selected encryption algorithm on the buffer (e.g., data buffer 260) referenced by the PDT entry's DBP 250 skipping those regions masked by the mask buffer referenced by DMP 252. In an embodiment, the encrypt code uses the keys stored in SMRAM corresponding to the selected key ID 268. On SMM return, the data buffers 260 will be encrypted and ready to communicate securely. In an embodiment, the keying material is not divulged to the invoking program. Rather, the management mode uses the correct keying material (e.g., as identified by key ID 268) on behalf of the invoking program (e.g., if the program image of the invoking program has been verified in memory).

In an embodiment, an integrity check operation may cause a handler to execute a selected integrity checking algorithm on, for example, integrity buffer 265 as referenced by Integrity Buffer Pointer (IBP) 258. In an embodiment, the handler may skip regions of buffer 265 that are specified by Data Mask Pointer (DMP) 252. The integrity checking algorithm may be based, at least in part, on the associated session key identified by key id 268. In one embodiment, the results of the integrity checking algorithm are provided in a Hash Method Authentication Code (HMAC) that is stored in integrity buffer 265. Examples of integrity checking algorithms include, but are not limited to, Secure Hash Algorithm 1 (SHA1) or Message Digest 5 (MD5).

In an embodiment, a decrypt operation may cause an SMI handler to execute a decryption algorithm on one or more buffers referenced by DBP 250, skipping DMP 252 masked regions. In an embodiment, the SMM decrypt code (not shown) may use the keys stored in SMRAM 200 corresponding to Key ID 268. On SMM return, the buffers referenced by DBP 250 are decrypted and ready to be read or an error code Error Code (EC) 272 is set for the appropriate entry in PDT 240.

In a similar fashion to the decrypt operation, the integrity of the data buffer referenced by DBP 250 may be validated by the SMM code. The integrity check may be based, at least in part, on an HMAC provided in the integrity buffer referenced by IBP 258 and the associated session key value for the Key ID 268 found in SMRAM 200. The success or failure of the integrity check can then be communicated back to the program that invoked the SMI through the PDT error code EC 272 for the corresponding PDT entry.

In an embodiment, private keys (e.g., for public/private cryptographic operations) can be protected by the SMM. In one embodiment, an SMM component may provide pubic/private operations such as generating public/private key pairs. In an embodiment, an SMM operation performs Diffie-Hellman exchange using protected private keys. The SMM operation may encrypt data with a private key identified by key ID 268. Similarly, an SMM operation may decrypt data with a private key identified by key ID 268.

In an embodiment, Program End Notification 275 may be issued by the program or device driver to denote the end of the program segment's use of the SMM facilities prior to the program's return to its caller. In an embodiment, Program End Notification 275 is an SMI notification. The handler (e.g., SMI handler) for this notification resets the PIPC table 215's PSN value from TRUE to FALSE for the entry matching the SSM recovered program counter. In one embodiment, the SMM module will no longer act on future Operation Notifications from this program until Program Start Notification 270 is again properly initiated from the valid program image. This effectively locks out other malicious programs from attempting to circumvent the SMM module for this program ID by modifying the program's data structures and then simply jumping into the instruction just prior to the valid program's code that invokes the SMI Operation Notification. By bounding all Operation Notifications between Program Start Notification 270 and Program End Notification 275, the program writer can be assured that all program segments between Notification 270 and Notification 275 have been executed before an Operation Notification initiated from the program's valid image will be allowed.

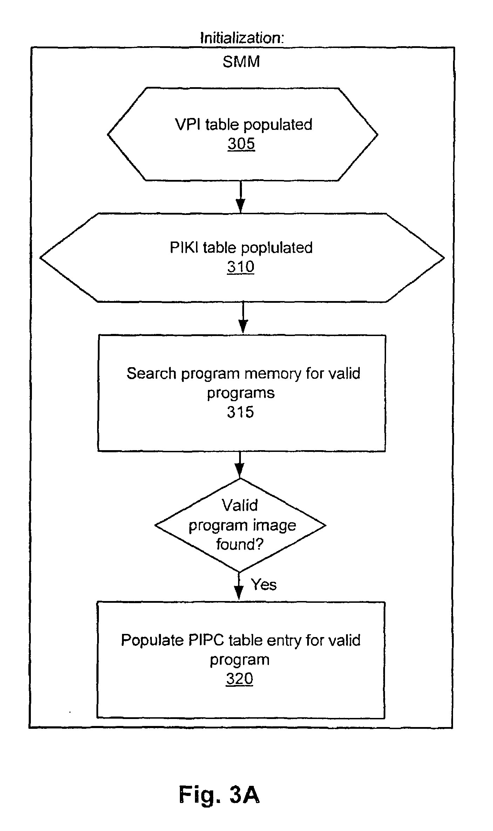

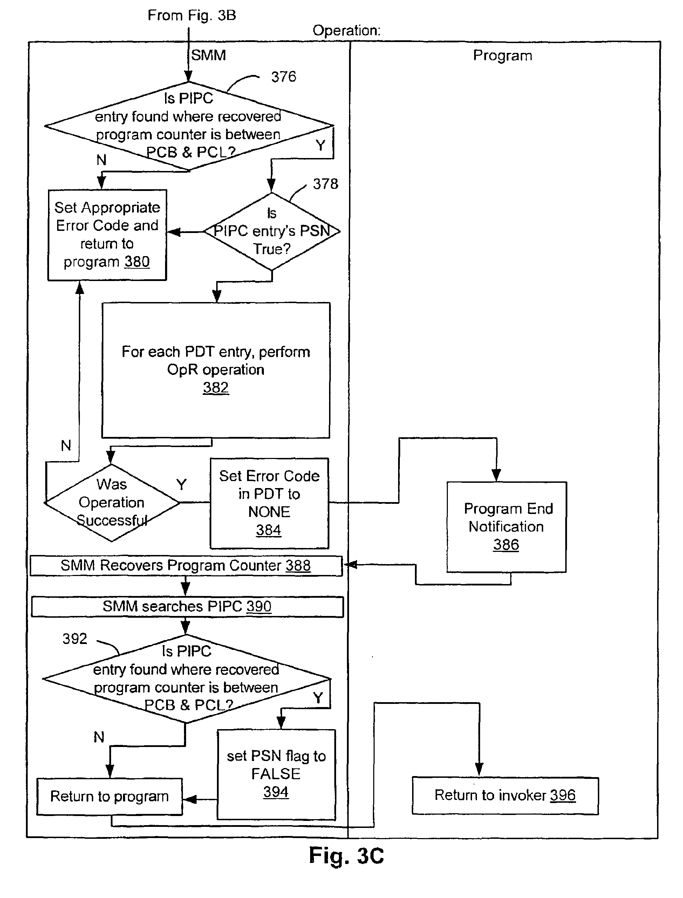

Turning now to FIGs. 3A-3C, the particular methods associated with embodiments of the invention are described in terms of computer software and hardware with reference to a flowchart. The methods to be performed by a computing device may constitute state machines or computer programs made up of computer-executable instructions. The computer-executable instructions may be written in a computer programming language or may be embodied in firmware logic. If written in a programming language conforming to a recognized standard, such instructions can be executed on a variety of hardware platforms and for interface to a variety of operating systems. In addition, embodiments of the invention are not described with reference to any particular programming language. It will be appreciated that a variety of programming languages may be used to implement embodiments of the invention as described herein. Furthermore, it is common in the art to speak of software, in one form or another (e.g., program, procedure, process, application, etc.), as taking an action or causing a result. Such expressions are merely a shorthand way of saying that execution of the software by a computing device causes the device to perform an action or produce a result.

FIGs. 3A-3C are flow diagrams illustrating selected aspects of a method for secure inter-platform and intra-platform communications, according to an embodiment of invention. The method described in FIGs. 3A-3C may be implemented with the data structures described with reference to FIGs. 2A-2B. In an alternative embodiment, the method described in FIGs. 3A-3C may be implemented with different data structures.

FIG. 3A is a flow diagram illustrating certain aspects of a method for initializing a protected region of memory (e.g., SMRAM 200, shown in FIG. 2A), according to an embodiment of the invention. Referring to process block 305, a VPI table (e.g., VPI table 205, shown in FIG. 2A) is populated with program identification information. In one embodiment, the VPI table is populated via a secure out-of-band channel. Referring to process block 310, a PIKI table (e.g., PIKI table 210, shown in FIG. 2A) is populated with confidential information such as key values (e.g., key values 212, shown in FIG. 2A) and corresponding key identifiers (e.g., key IDs 214, shown in FIG. 2A) associated with program identifiers (e.g., program IDs 216, shown in FIG. 2A).

Referring to process block 315, an SMM module (or other trusted agent) searches program memory (e.g., program memory 235, shown in FIG. 2B) for programs corresponding to the program IDs provisioned in process block 310. Referring to process block 320, the SMM module sets a Program Counter Base (PCB) (e.g., PCB 222, shown in FIG. 2A) and a Program Counter Limit (PCL) (e.g., PCL 224, shown in FIG. 2A) for the associated program ID of each found program.

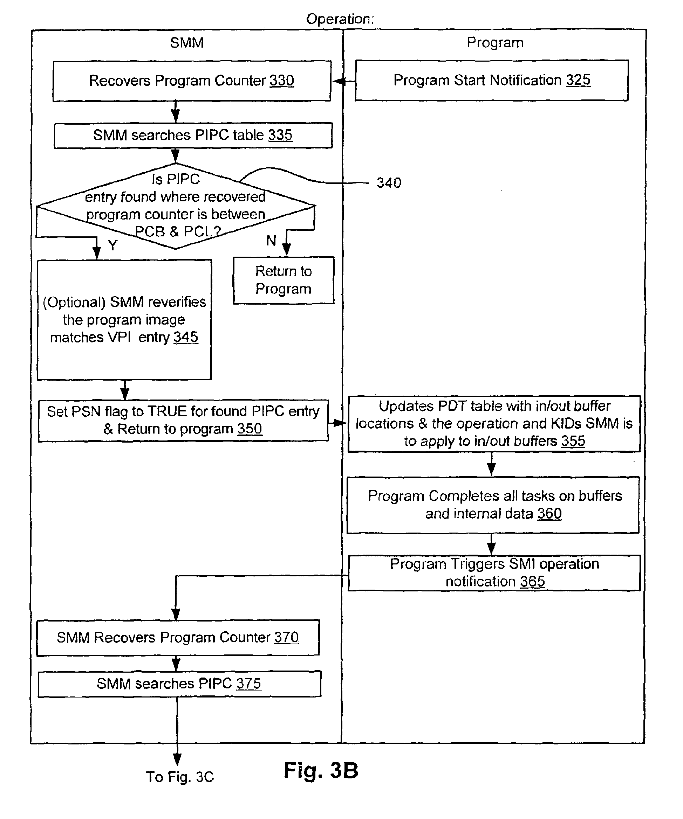

FIGs. 3B-3C are a flow diagram illustrating certain aspects of a method for secure inter-platform and intra-platform communication, according to an embodiment of the invention. Referring to process block 325, a Program Start Notification (e.g., Program Start Notification 270, shown in FIG. 2B) triggers the SMM. An SMM module recovers the program counter from, for example, a saved state map at process block 330. Referring to process block 335, the SMM module searches a PIPC table for an entry corresponding to the program that sent the program start notification. In an embodiment, if an entry is found, the SMM module checks to see whether the recovered program counter is between the PCB and the PCL at process block 340. Checking to see whether the recovered program counter is between the PCB and the PCL helps to ensure that the program start notification was actually sent by the program and not by malicious software. In some embodiments, the SMM module re-verifies that the invoking program image matches an entry in the VPI table (e.g., by calculating a hash value and comparing the calculated hash value to a predetermined hash value stored in the VPI table) as shown by process block 345.

Referring to process block 350, a program start notification flag is set to true and control is returned to the invoking program. In an embodiment, the invoking program is now allowed to modify the data in a program data table (PDT) (e.g., PDT 240, shown in FIG. 2B). The program updates buffer locations (e.g., via DBP 250 and IBP 258, shown in FIG. 2B) and provides appropriate key identifiers (e.g., key identifiers 268, shown in FIG. 2B) at process block 355. The program completes buffer related tasks (e.g., allocation of the buffers, etc.) at process block 360. Referring to process block 365, the program triggers an operation notification (e.g., an SMI notification) and control returns to the SMM.

Referring to process block 370, an SMM module recovers the program counter from the saved state map (SSM). The SMM module searches the PIPC table for an entry corresponding to the invoking program at 375. Referring to process block 376, the SMM module determines whether the recovered program counter is between the PCB and the PCL as recorded in the entry of the PIPC table that corresponds to the invoking program. In one embodiment, there may be multiple allowed ranges for the PCB and the PCL. In such an embodiment, the SMM module may determine whether the program counter is within one of the multiple allowed ranges for the PCB and the PCL. Referring to process block 378, the SMM module determines whether the program start notification flag in the invoking program's PIPC table entry is set to true. In an embodiment, if either of the conditions checked in process blocks 376 or 378 are not true, then the SMM module sets the appropriate error code (e.g., error code 272, shown in FIG. 2B) and returns control to the invoking program as shown at 380. Referring to process bock 382, the SMM module performs on operation as specified by an operation request (e.g., operation request 245, shown in FIG. 2B). The operation may be performed on data that is in a data buffer as referenced by a data buffer pointer (e.g., DPB 250, shown in FIG. 2B). The SMM module may use a key value (e.g., a key value 212, shown in FIG. 2A) for a corresponding program ID and key ID to process the data. In an embodiment, the SMM module skips masked areas as specified by a data mask buffer (e.g., data mask buffer 256, shown in FIG. 2B).

If the operation is successful, the SMM module may set an error code to NONE and return control to the invoking program at process block 384. Referring to process block 386, the program may send a program end notification to prevent the program data table from being modified by an unauthorized program. An SMM module recovers the program counter for the invoking program at process block 388. The SMM module searches the PIPC table for an entry corresponding to the invoking program at 390. In an embodiment, the SMM module determines whether the program counter for the invoking program is between the PCB and the PCL at process block 392. The program start notification flag is set to false at process block 394 and control is returned to the invoking program at 396. In an embodiment, the program data table cannot be modified while the program start notification flag is set to false.

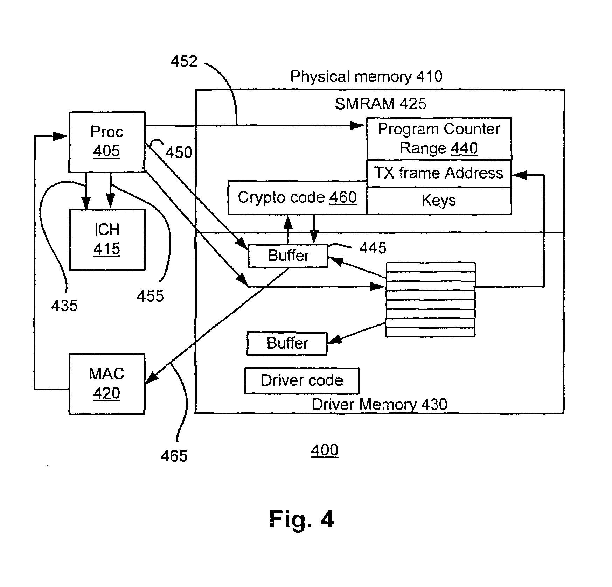

FIG. 4 is a block diagram of framework 400 for encrypting outbound packets, according to an embodiment of the invention. For the purposes of illustrating an embodiment of the invention, FIG. 4 refers to the transmit queue of framework 400. It is to be appreciated that the operation described with reference to the outbound queue shown in FIG. 4 may also apply to the inbound queue on the receive side of platform 400 (not shown).

The illustrated embodiment of Framework 400 includes processor 405, physical memory 410, Input/Output (I/O) controller hub 415, and Media Access Control (MAC) device 420. Processor 405 may include a microprocessor, microcontroller, field programmable gate array (FPGA), application specific integrated circuit (ASIC), central processing unit (CPU), programmable logic device (PLD), and similar devices that access instructions from system storage (e.g., memory 410), decode them, and execute those instructions by performing arithmetic and logical operations.

Physical memory 410 may include a wide variety of memory devices including read-only memory (ROM), erasable programmable read-only memory (EPROM), electrically erasable programmable read-only memory (EEPROM), random access memory (RAM), non-volatile random access memory (NVRAM), cache memory, flash memory, and other memory devices. In an embodiment, Physical memory 410 includes SMRAM 425 and driver memory 430. In one embodiment, SMRAM 425 and driver memory 430 are two regions of the same memory device. In an alternative embodiment, SMRAM 425 and driver memory 430 are implemented on separate memory devices.

In one embodiment, I/O Controller Hub (ICH) 415 may provide an interface between framework 400 and peripheral I/O devices as well as between framework 400 and MAC device 420, which may provide an interface to an external network (not shown).

In an embodiment, framework 400 transmits packets as described below. A network device driver (not shown) generates an SMI Program Start Notification as shown by reference number 435. An SMI handler recovers the program counter of the device driver and compares the recovered program counter to a range of allowable program counter values stored in PIPC table 440. In an embodiment, the device driver's address is retrieved from the recovered program counter.

The network device driver sets up buffer(s) 445 for transmission (e.g., with interrupts disabled) at 450. After the buffer(s) 445 are set up, the network device driver causes an SMI Operation Notification specifying Operation Requests of "encrypt" and/or "integrity generation" notification types as shown by reference number 455. An SMI handler records the physical addresses of frames deposited in buffer(s) 445 that are ready for transmission. In an embodiment, a DBP in a PDT specifies the physical addresses of buffer(s) 445.

In an embodiment, the SMI handler runs encrypt code 460 and/or integrity generation code on, for example, buffer(s) 445 holding the data that is ready to be sent. In an embodiment, buffer(s) 445 are encrypted in place and/or integrity HMAC is generated in a buffer referenced by an integrity buffer pointer of a PDT (not shown) and control is returned to the network device driver. In an embodiment, the device driver uses direct memory access to send the frames stored buffer(s) 445 to MAC device 420. Reference number 465 illustrates the buffered data being sent to MAC device 420 via direct memory access. MAC device 420 sends a transmit complete signal to processor 405 after transmitting the data it received from buffer(s) 445. In an embodiment, the device driver triggers an SMI program end notification after the transmission is complete.

As shown in FIG. 4 (e.g., in reference numbers 435, 450, and 455), embodiments of the invention may provide intra-platform communication as well as inter-platform communication. One example of intra-platform communication is the exchange of authenticated heartbeat messages between security software on the host and a firmware security agent on an embedded management processor on the platform (Proactive/Navassa) to establish the presence of the security components.

Regular heartbeat communication establishes the presence of the security agents on the platform. This communication is sensitive and, in an embodiment, it may be protected against spoofing. This communication may be over any medium, for example, via direct memory access, or over a dedicated management bus. In an embodiment, (as described above) an integrity check and/or an encrypt operation may be applied to the heartbeat message in a tamper-resistant and confidential environment. An embedded management processor may set up the keys so that it can verify the heartbeat messages. In an embodiment, the keys used are not divulged to the security software whose presence is established by the heartbeat. The end-points communicating in this case may be the host software and management software on the embedded management controller. The same concept can be used for sensitive inter-program communication or for integrity preservation of data for a single program (this single program is both the source and destination of the data exchange). In one embodiment, a random nonce may be used in conjunction with the key to prevent replay attacks in an alternate embodiment.

As shown in FIG. 4 (e.g., in reference numbers 435 and 452), embodiments of the invention may provide intra-program communication as well as inter-program communication. In an embodiment, the program may be a kernel component (e.g., a ring-0 program). In one embodiment, the program may be an application (e.g., a ring-3 program). In an embodiment in which the program is an application, the protected communications may be referred to as inter-process and/or intra-process communications. For example, in an embodiment, a program may secure its own data and state over time, from invocation to invocation, so that no other program can modify its data or state unbeknownst to the program that owns the data or state.

In such an embodiment, the "legitimate" program may use the SMM protected keys to hide and reveal data by encrypting and decrypting the data so that only the same (or other) legitimate program(s) can access the data. In an alternative embodiment, the program can use the SMM protected keys to verify the integrity of its state, from invocation to invocation, by calculating an HMAC for the internal program state when the program is invoked to assure that the data is unchanged since the previous invocation. Prior to the program's return, the program may issue an SMI to generate a new HMAC for its internal state or other data to be verified at the time of the next invocation. Alternatively, the program can create a hash value or running checksum for its internal data structures and simply use the SMM component to sign or otherwise protect the integrity of the program generated hash/checksum of its own data structures. In such an embodiment, the program will calculate the hash/checksum of its internal data structures prior to the SMI Program End Notification and after the SMI Program Start Notification. Operation Notifications may be used to check the integrity of this hash/checksum prior to its use, and new integrity HMACs may be generated again after the program has finished manipulating its data structures and updated its hash/checksum. In an embodiment, errors in integrity validation are reported to the calling program via error codes in the PDT (e.g., PDT 240, shown in FIG. 2B).

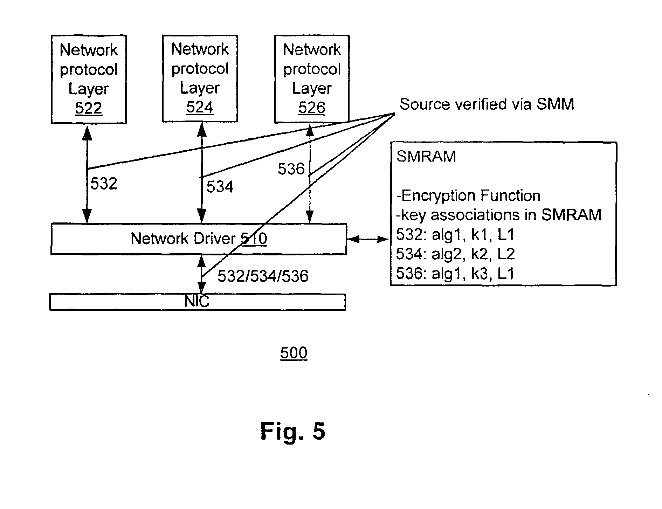

FIG. 5 is a block diagram of framework 500 illustrating an embodiment of the invention that supports network security protocols at different layers. In an embodiment, framework 500 my support network layer security (e.g., Internet Protocol Security (IPSEC)), Transport Layer Security (TLS), and/or application layer security.

In one embodiment, network driver 510 "tags" the frame descriptors received from (and/or transmitted to) various network layer protocols 522-526 with additional meta-data (e.g., 532, 534, and 536). These tags are also pre-provisioned in SMRAM (along with the keys) and used by the SMI handlers to decide, for example, which encryption algorithm to use, which keys to use, and what layers to encrypt. In an embodiment, the upper protocol layers (e.g., protocol layers 522-526) are also source verified when calling into network driver 510 to prevent an attacker from injecting frames into secured sessions.

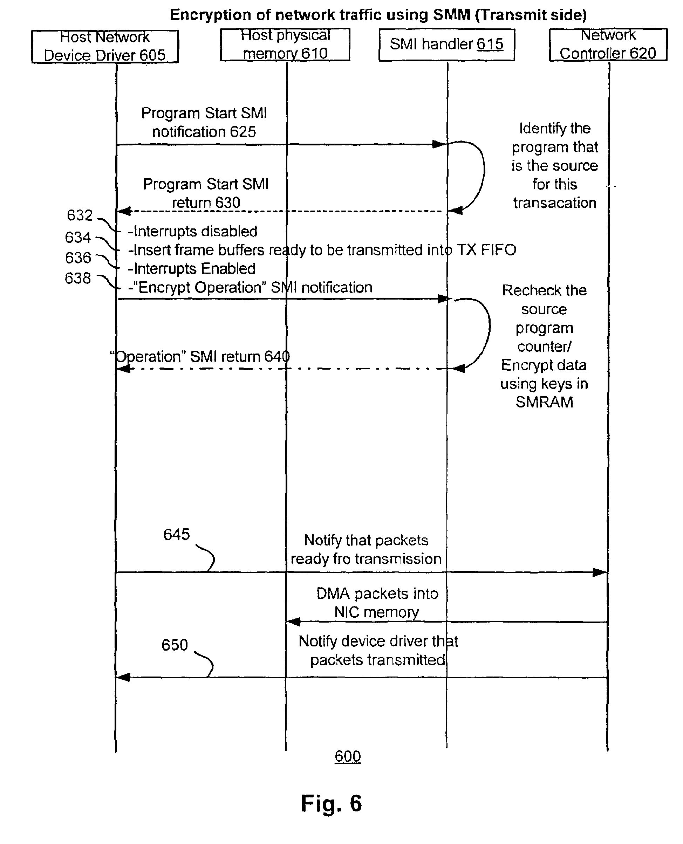

FIG. 6 is a transaction diagram illustrating transaction 600 implemented according to an embodiment of the invention. Transaction 600 includes host network device driver 605, host physical memory 610, SMI handler 615, and network controller 620. In an embodiment, device driver 605 causes program start SMI notification 625 to be sent to SMI handler 615. SMI handler 615 may identify device driver 605 as the program that is the source for the transaction via, for example, a saved state map (not shown). SMI handler returns control to device driver 605 at reference number 630.

In an embodiment, device driver 605 may disable interrupts to protect against context switching during transaction 600 as shown by 632. Device driver 605 may then insert frame buffers that are ready to be transmitted into a transmit First In First Out (FIFO) queue (queue not shown) as shown by 634. In one embodiment, the interrupts are enabled when the FIFO queue is loaded as shown by 636. Device driver 605 may then send an encrypt operation SMI notification to SMI handler 615 as shown by 638.

SMI handler 615 may recheck the source program counter to confirm that it corresponds to device driver 605. In an embodiment, SMI handler 615 encrypts data that is specified in, for example, a program data table for device driver 605 using key material that is stored in SMRAM. SMI handler 615 may then return control to device driver 605 via operation SMI return 640. Device driver 605 may then notify network controller 620 that the packets are ready for transmission as shown by reference number 645. Network controller 620 may use, for example, direct memory access to send the packets to the network interface card memory in host physical memory 610. In an embodiment, network controller 620 notifies device driver 605 that the packets were transmitted at 650.

Elements of embodiments of the present invention may also be provided as a machine-accessible medium for storing the machine-executable instructions. A machine-accessible medium includes any mechanism that provides (e.g., stores and/or transmits) information in a form accessible by a machine (e.g., a computer, a network device, a personal digital assistant, a manufacturing tool, any device with a set of one or more processors, etc.). For example, a machine-accessible medium includes recordable/non-recordable media (e.g., road only memory (ROM); random access memory (RAM); magnetic disk storage media; optical storage media; flash memory devices, etc.), as well as electrical, optical, acoustical or other form of propagated signals (e.g., carrier waves, infrared signals, digital signals, etc.); etc.

It should be appreciated that reference throughout this specification to "one embodiment" or "an embodiment" means that a particular feature, structure or characteristic described in connection with the embodiment is included in at least one embodiment of the present invention. Therefore, it is emphasized and should be appreciated that two or more references to "an embodiment" or "one embodiment" or "an alternative embodiment" in various portions of this specification are not necessarily all referring to the same embodiment. Furthermore, the particular features, structures or characteristics may be combined as suitable in one or more embodiments of the invention.

Similarly, it should be appreciated that in the foregoing description of embodiments of the invention, various features are sometimes grouped together in a single embodiment, figure, or description thereof for the purpose of streamlining the disclosure aiding in the understanding of one or more of the various inventive aspects. This method of disclosure, however, is not to be interpreted as reflecting an intention that the claimed subject matter requires more features than are expressly recited in each claim. Rather, as the following claims reflect, inventive aspects lie in less than all features of a single foregoing disclosed embodiment. Thus, the claims following the detailed description are hereby expressly incorporated into this detailed description, with each claim standing on its own as a separate embodiment of this invention.

## Claims

1. A method comprising:
invoking a management mode with an operation notification from a software program executing in a program memory (235) of a host system, the management mode having a protected region of memory that is inaccessible to a host operating system, wherein the host operating system temporarily relinquishes control of the host system to the management mode; and
providing a security operation from the protected region of memory to the software program executing in the program memory (235), if the management mode is invoked
**characterised in that**
the security operation is initialized over a secure channel including storing one or more program identifiers in the protected region of memory, wherein each program identifier is to identify a software program that is authorized to invoke the management mode; and storing keying material in the protected region of memory, the keying material to be accessed by a software program identified by at least one of the one or more program identifiers.

2. The method of claim 1, further comprising:
invoking the management mode with a start notification (270), the start notification (270) to indicate that the software program is executing in program memory (235); and
setting a start indicator in the protected region of memory to show that the software program is executing in the program memory (235).

3. The method of claim 2, wherein providing the security operation from the protected region of memory to the software program executing in the program memory (235) further comprises:
providing the security operation from the protected region of memory to the software program executing in the program memory (235), if the start indicator is set.

4. The method of claim 2, further comprising:
verifying that the software program provided the start notification (270).

5. The method of claim 4, wherein verifying that the software program provided the start notification (270) comprises:
obtaining a program counter value of the software program, responsive to receiving the start notification (270); and
comparing the program counter value to an allowed range of program counter values (222, 224).

6. The method of claim 4, further comprising:
verifying the integrity of the software program.

7. The method of claim 6, wherein verifying the integrity of the software program comprises:
computing a hash value of at least a portion of an image of the software program; and
comparing the computed hash value to a predetermined hash value to determine whether the software program is modified.

8. The method of claim 1, wherein the software program is a kernel program.

9. The method of claim 8, wherein the kernel program is a device driver (605).

10. The method of claim 1, wherein providing the security operation from the protected region of memory to the software program executing in the program memory (235) comprises:
accessing data stored in the protected region of memory for the software program.

11. The method of claim 10, wherein accessing data stored in the protected region of memory for the software program comprises:
accessing keying material for the software program, wherein the keying material is stored in the protected region of memory.

12. The method of claim 11, wherein accessing keying material for the software program comprises accessing at least one of:
an encryption key for a cryptographic operation; and
a session key for an integrity check operation.

13. The method of claim 1, wherein providing the security operation from the protected region of memory to the software program executing in the program memory (235) comprises:
providing security processing for data of the software program.

14. The method of claim 13, wherein the data of the software program comprises at least one of: state information of the software program;
transmit buffer data to be transmitted to a second software program executing on the same processor as the software program; transmit buffer data to be transmitted to a second software program executing on another processor of the host system; and
transmit buffer data to be transmitted to a second software program executing on another host system.

15. The method of claim 13, wherein providing the security processing for data of the software program comprises at least one of:
encrypting the data;
decrypting the data;
checking the integrity of the data; and
adding integrity information to the data.

16. The method of claim 15, wherein checking the integrity of the data comprises:
computing a hash value of the data; and
comparing the computed hash value to a predetermined hash value.

17. An apparatus comprising:
a host processor to execute instructions of a software program, the software program having instructions to invoke a security operation resident in a secure memory, wherein a host operating system temporarily relinquishes control of a host system to the security operation, responsive to an invocation from the software program **characterised in that**,
the security operation is initialized over a secure channel including storing one or more program identifiers in the protected region of memory, wherein each program identifier is to identify a software program that is authorized to invoke the management mode; and storing keying material in the protected region of memory, the keying material to be accessed by a software program identified by at least one of the one or more program identifiers;
a program memory (235) to store data of the software program communicatively coupled to the host processor; and
the secure memory not visible to the host operating system, communicatively coupled to the program memory (235), the secure memory to provide the security operation to process the data of the software program.

18. The apparatus of claim 17, wherein the program memory (235) is a synchronous dynamic random access memory (SDRAM) device.

19. The apparatus of claim 17 or 18, wherein the software program is a network device driver and the program memory is a transmit buffer to store transmit data.

20. The apparatus of claim 19, wherein the security operation is at least one of:
encrypting the transmit data; and
checking the integrity of the transmit data.

21. The apparatus of claim 19, further comprising:
a network interface communicatively coupled with the program memory (235) to receive the transmit data from the program memory (235) and to send the transmit data to another host system over a network.

22. A storage medium storing program instructions for programming a processing apparatus to become operable to perform a method as set out in any one of claims 1 to 16.

## Patentansprüche

1. Verfahren, bei dem
ein Verwaltungsmodus mit einer Betriebsnachricht von einem Softwareprogramm aufgerufen wird, das in einem Programmspeicher (235) eines Host-Systems abläuft, wobei der Verwaltungsmodus einen geschützten Bereich des Speichers hat, der für ein Host-Betriebssystem unzugänglich ist, wobei das Host-Betriebssystem die Steuerung des Host-Systems vorübergehend dem Verwaltungsmodus überlässt, und
von dem geschützten Bereich des Speichers dem in dem Programmspeicher (235) ablaufenden Softwareprogramm ein Sicherheitsbetrieb zur Verfügung gestellt wird, wenn der Verwaltungsbetrieb aufgerufen ist,
**dadurch gekennzeichnet, dass**
der Sicherheitsbetrieb über einen sicheren Kanal initialisiert wird und dabei ein oder mehrere Programmkennungen in dem geschützten Bereich des Speichers abgespeichert werden, wobei jede Programmkennung zur Identifizierung eines Softwareprogramms dient, das autorisiert ist, den Verwaltungsmodus aufzurufen, und
in dem geschützten Bereich des Speichers Verschlüsselungsmaterial abgespeichert wird, auf das ein von mindestens einem der ein oder mehreren Programmkennungen identifiziertes Softwareprogramm zugreifen kann.

2. Verfahren nach Anspruch 1, wobei ferner
der Verwaltungsmodus mit einer Startnachricht (270) aufgerufen wird, die anzeigt, dass das Softwareprogramm in dem Programmspeicher (235) abläuft, und
in dem geschützten Bereich des Speichers ein Startindikator gesetzt wird, der zeigt, dass das Softwareprogramm in dem Programmspeicher (235) abläuft.

3. Verfahren nach Anspruch 2, wobei es zum Bereitstellen der Sicherheitsoperation des Speichers für das in dem Programmspeicher (235) ablaufende Softwareprogramm gehört, dass dies geschieht, wenn der Startindikator gesetzt ist.

4. Verfahren nach Anspruch 2, wobei ferner verifiziert wird, dass das Softwareprogramm die Startnachricht (270) zur Verfügung gestellt hat.

5. Verfahren nach Anspruch 4, wobei es zum Verifizieren, dass das Softwareprogramm die Startnachricht (270) zur Verfügung gestellt hat, gehört, dass
bei Empfang der Startnachricht (270) ein Programmzählerwert des Softwareprogramms erhalten und
der Programmzählerwert mit einem zulässigen Bereich von Programmzählerwerten (222, 224) verglichen wird.

6. Verfahren nach Anspruch 4, wobei ferner die Vollständigkeit des Softwareprogramms verifiziert wird.

7. Verfahren nach Anspruch 6, wobei zum Verifizieren der Vollständigkeit des Softwareprogramms:
von mindestens einem Teil eines Bildes des Softwareprogramms ein Hash-Wert berechnet und
dieser mit einem vorgegebenen Hash-Wert verglichen wird, um zu ermitteln, ob das Softwareprogramm geändert ist.

8. Verfahren nach Anspruch 1, wobei das Softwareprogramm ein Kernel-Programm ist.

9. Verfahren nach Anspruch 8, wobei das Kernel-Programm ein Gerätetreiber (605) ist.

10. Verfahren nach Anspruch 1, wobei es zum Bereitstellen des Sicherheitsbetriebs von dem geschützten Speicherbereich für das in dem Programmspeicher (235) ablaufende Softwareprogramm gehört, dass auf Daten zugegriffen wird, die in dem geschützten Bereich des Speichers für das Softwareprogramm abgespeichert sind.

11. Verfahren nach Anspruch 10, wobei zum Zugriff auf Daten, die in dem geschützten Bereich des Speichers für das Softwareprogramm abgespeichert sind, auf in dem geschützten Bereich des Speichers abgespeichertes Verschlüsselungsmaterial für das Softwareprogramm zugegriffen wird.

12. Verfahren nach Anspruch 11, wobei zum Zugriff auf Verschlüsselungsmaterial für das Softwareprogramm auf
einen Chiffrierschlüssel für einen Chiffriervorgang und/oder
einen Sitzungsschlüssel für einen Vollständigkeits-Prüfvorgang zugegriffen wird.

13. Verfahren nach Anspruch 1, wobei zum Bereitstellen des Sicherheitsbetriebs von dem geschützten Bereich des Speichers für das in dem Programmspeicher (235) ablaufende Softwareprogramm eine Sicherheitsverarbeitung für Daten des Softwareprogramms bereitgestellt wird.

14. Verfahren nach Anspruch 13, wobei zu den Daten des Softwareprogramms mindestens eine der folgenden Informationen gehört:
Zustandsinformationen des Softwareprogramms,
Übertragungspufferdaten, die an ein zweites Softwareprogramm zu übertragen sind, das auf dem gleichen Prozessor läuft wie das Softwareprogramm,
Übertragungspufferdaten, die an ein zweites Softwareprogramm zu übertragen sind, die auf einem anderen Prozessor des Host-Systems laufen, und
Übertragungspufferdaten, die an ein zweites Softwareprogramm zu übertragen sind, das auf einem anderen Host-System läuft.

15. Verfahren nach Anspruch 13, wobei zum Bereitstellen der Sicherheitsverarbeitung für Daten des Softwareprogramms mindestens einer der folgenden Vorgänge gehört:
Chiffrieren der Daten,
Dechiffrieren der Daten,
Prüfung der Daten auf Vollständigkeit und
Hinzufügen einer Vollständigkeitsinformation zu den Daten.

16. Verfahren nach Anspruch 15, wobei es zum Prüfen der Daten auf Vollständigkeit gehört, dass
ein Hash-Wert der Daten berechnet und
dieser mit einem vorgegebenen Hash-Wert verglichen wird.

17. Vorrichtung mit
einem Host-Prozessor zum Ausführen von Befehlen eines Softwareprogramms, das Befehle zum Aufrufen eines in einem sicheren Speicher abgelegten Sicherheitsbetriebs aufweist, wobei bei Aufruf von dem Softwareprogramm ein Host-Betriebssystem die Steuerung eines Host-Systems vorübergehend einem Sicherheitsbetrieb überlässt, **dadurch gekennzeichnet, dass**
der Sicherheitsbetrieb über einen sicheren Kanal initialisiert wird und dabei ein oder mehrere Programmkennungen in dem geschützten Bereich des Speichers abgespeichert werden, wobei jede Programmkennung zur Identifizierung eines Softwareprogramms dient, das autorisiert ist, den Verwaltungsmodus aufzurufen,
in dem geschützten Bereich des Speichers Verschlüsselungsmaterial abgespeichert ist, auf das ein von mindestens einem der ein oder mehreren Programmkennungen identifiziertes Softwareprogramm zugreifen kann.
ein Programmspeicher (235) Daten des Softwareprogramms speichert, die mit dem Host-Prozessor kommunikativ gekoppelt sind, und
der sichere Speicher für das Host-Betriebssystem nicht sichtbar und mit dem Programmspeicher (235) kommunikativ gekoppelt ist, wobei der sichere Speicher dazu dient, das Sicherheitsprogramm zur Verarbeitung der Daten des Softwareprogramms bereitzustellen.

18. Vorrichtung nach Anspruch 17, wobei der Programmspeicher (235) ein synchrones dynamisches Speichergerät mit wahlfreiem Zugriff (SDRAM) ist.

19. Vorrichtung nach Anspruch 17 oder 18, wobei das Softwareprogramm ein Netz-Gerätetreiber und der Programmspeicher ein Übertragungspuffer zum Abspeichern von Übertragungsdaten ist.

20. Vorrichtung nach Anspruch 19, wobei der Sicherheitsbetrieb mindestens einer der folgenden Vorgänge ist:
Chiffrieren der Übertragungsdaten und
Prüfen der Übertragungsdaten auf Vollständigkeit.

21. Vorrichtung nach Anspruch 19, mit ferner einer Netzschnittstelle, die mit dem Programmspeicher (235) kommunikativ gekoppelt ist, um die Übertragungsdaten von dem Programmspeicher (235) zu empfangen und über ein Netz an ein weiteres Host-System zu senden.

22. Speichermedium, auf dem Programmbefehle zum derartigen Programmeren einer Verarbeitungsvorrichtung enthalten sind, dass diese in der Lage ist, ein Verfahren nach einem der Ansprüche 1 bis 16 durchzuführen.

## Revendications

1. Procédé comprenant le fait :
d'invoquer un mode de gestion avec une notification d'opération provenant d'un programme logiciel en cours d'exécution dans une mémoire de programme (235) d'un système hôte, le mode de gestion présentant une région de mémoire protégée qui est inaccessible à un système d'exploitation hôte, dans lequel le système d'exploitation hôte abandonne temporairement le contrôle du système hôte au mode de gestion ; et
de fournir une opération de sécurité de la région de mémoire protégée au programme logiciel en cours d'exécution dans la mémoire de programme (235), si le mode de gestion est invoqué ;
**caractérisé en ce que**
l'opération de sécurité est initialisée sur un canal sécurisé comprenant le fait de stocker un ou plusieurs identifiants de programme dans la région de mémoire protégée, chaque identifiant de programme visant à identifier un programme logiciel qui est autorisé à invoquer le mode de gestion ; et de stocker un élément de clé dans la région de mémoire protégée, l'élément de clé faisant l'objet d'un accès par un programme logiciel identifié par au moins l'un du ou des identifiants de programme.

2. Procédé de la revendication 1, comprenant en outre le fait :
d'invoquer le mode de gestion avec une notification de démarrage (270), la notification de démarrage (270) visant à indiquer que le programme logiciel s'exécute dans la mémoire de programme (235) ; et
de régler un indicateur de démarrage dans la région de mémoire protégée en vue de montrer que le programme logiciel est en cours d'exécution dans la mémoire de programme (235).

3. Procédé de la revendication 2, dans lequel le fait de fournir une opération de sécurité de la région de mémoire protégée au programme logiciel en cours d'exécution dans la mémoire de programme (235) comprend en outre le fait :
de fournir l'opération de sécurité de la région de mémoire protégée au programme logiciel en cours d'exécution dans la mémoire de programme (235), si l'indicateur de démarrage est réglé.

4. Procédé de la revendication 2, comprenant en outre le fait :
de vérifier que le programme logiciel a fourni la notification de démarrage (270).

5. Procédé de la revendication 4, dans lequel la vérification quant à la fourniture par le programme logiciel de la notification de démarrage (270) comprend le fait :
d'obtenir une valeur de compteur de programme du programme logiciel, en réponse à la réception de la notification de démarrage (270) ; et
de comparer la valeur de compteur de programme à une plage admise de valeurs de compteur de programme (222, 224).

6. Procédé de la revendication 4, comprenant en outre le fait :
de vérifier l'intégrité du programme logiciel.

7. Procédé de la revendication 6, dans lequel la vérification de l'intégrité du programme logiciel comprend le fait :
de calculer une valeur de hachage d'au moins une partie d'une image du programme logiciel ; et
de comparer la valeur de hachage calculée à une valeur de hachage prédéterminée en vue de déterminer si le programme logiciel est modifié.

8. Procédé de la revendication 1, dans lequel le programme logiciel est un programme de noyau.

9. Procédé de la revendication 8, dans lequel le programme de noyau est un pilote de dispositif (605).

10. Procédé de la revendication 1, dans lequel la fourniture de l'opération de sécurité de la région de mémoire protégée au programme logiciel en cours d'exécution dans la mémoire de programme (235) comprend le fait :
d'accéder à des données stockées dans la région de mémoire protégée pour le programme logiciel.

11. Procédé de la revendication 10, dans lequel l'accès à des données stockées dans la région de mémoire protégée pour le programme logiciel comprend le fait :
d'avoir accès à un élément de clé pour le programme logiciel, l'élément de clé étant stocké dans la région de mémoire protégée.

12. Procédé de la revendication 11, dans lequel l'accès à un élément de clé pour le programme logiciel comprend le fait d'accéder à au moins l'une parmi :
une clé de cryptage pour une opération cryptographique ; et
une clé de session pour une opération de vérification d'intégrité.

13. Procédé de la revendication 1, dans lequel la fourniture de l'opération de sécurité de la région de mémoire protégée au programme logiciel en cours d'exécution dans la mémoire de programme (235) comprend le fait :
de prévoir un traitement de sécurité pour des données du programme logiciel.

14. Procédé de la revendication 13, dans lequel les données du programme logiciel comprennent au moins des données parmi :
des informations d'état du programme logiciel ;
des données de mémoire tampon de transmission à transmettre à un second programme logiciel en cours d'exécution sur le même processeur que le programme logiciel ;
des données de mémoire tampon de transmission à transmettre à un second programme logiciel en cours d'exécution sur un autre processeur du système hôte ; et
des données de mémoire tampon de transmission à transmettre à un second programme logiciel en cours d'exécution sur un autre système hôte.

15. Procédé de la revendication 13, dans lequel le fait de fournir le traitement de sécurité pour des données du programme logiciel comprend au moins l'un parmi :
le cryptage des données ;
le décryptage des données ;
la vérification de l'intégrité des données ; et
l'ajout des informations d'intégrité aux données.

16. Procédé de la revendication 15, dans lequel la vérification de l'intégrité des données comprend le fait :
de calculer une valeur de hachage des données ; et
de comparer la valeur de hachage calculée à une valeur de hachage prédéterminée.

17. Appareil comprenant :
un processeur hôte visant à exécuter des instructions d'un programme logiciel, le programme logiciel ayant des instructions pour invoquer une opération de sécurité qui réside dans une mémoire sécurisée, dans lequel un système d'exploitation hôte abandonne temporairement le contrôle d'un système hôte à l'opération de sécurité, en réponse à une invocation provenant du programme logiciel **caractérisé en ce que**,
l'opération de sécurité est initialisée sur un canal sécurisé comprenant le fait de stocker un ou plusieurs identifiants de programme dans la région de mémoire protégée, chaque identifiant de programme visant à identifier un programme logiciel qui est autorisé à invoquer le mode de gestion ; et de stocker un élément de clé dans la région de mémoire protégée, l'élément de clé devant faire l'objet d'un accès par un programme logiciel identifié par au moins l'un du ou des identifiants de programme ;
une mémoire de programme (235) destinée à stocker des données du programme logiciel couplé en communication au processeur hôte ; et
la mémoire sécurisée n'étant pas visible par le système d'exploitation hôte, couplé en communication avec la mémoire de programme (235), la mémoire sécurisée devant fournir l'opération de sécurité pour traiter les données du programme logiciel.

18. Appareil de la revendication 17, dans lequel la mémoire de programme (235) est un dispositif de type mémoire vive dynamique synchrone (SDRAM).

19. Appareil de la revendication 17 ou 18, dans lequel le programme logiciel est un pilote de dispositif réseau et la mémoire de programme est une mémoire tampon de transmission destinée à stocker des données de transmission.

20. Appareil de la revendication 19, dans lequel l'opération de sécurité est au moins l'une parmi :
le cryptage des données de transmission ; et
la vérification de l'intégrité des données de transmission.

21. Appareil de la revendication 19, comprenant en outre :
une interface réseau couplée en communication avec la mémoire de programme (235) en vue de recevoir les données de transmission à partir de la mémoire de programme (235) et d'envoyer les données de transmission à un autre système hôte sur un réseau.

22. Support de stockage stockant des instructions de programme en vue de programmer un appareil de traitement pour qu'il puisse être mis en oeuvre afin de réaliser un procédé tel que défini dans l'une quelconque des revendications 1 à 16.
